# EUROPÄISCHE PATENTSCHRIFT

(11) **EP 2 636 907 B1**
(45) Veröffentlichungstag und Bekanntmachung des Hinweises auf die Patenterteilung: **25.03.2020**
(21) Anmeldenummer: 12195998.5
(22) Anmeldetag: 07.12.2012
(51) Int. Cl.: F15B 11/16, F01P 7/04, F15B 15/00

(54) **Hydrauliksystem für eine selbstfahrende Arbeitsmaschine**
Hydraulic system for a self-propelled work machine
Système hydraulique pour une machine de travail automobile

(30) Priorität: 05.03.2012 DE 102012101806
(43) Veröffentlichungstag der Anmeldung: 11.09.2013
(73) Patentinhaber: CLAAS Selbstfahrende Erntemaschinen GmbH, 33428 Harsewinkel (DE)
(72) Erfinder: Strieker, Norbert, 33415 Verl (DE); Lange, Johannes Dieter, 33758 Schloß Holte (DE); Hornberg, Oliver, 33604 Bielefeld (DE)
(74) Vertreter: CLAAS Gruppe

(56) Entgegenhaltungen:
- WO-A1-2010/124784
- DE-A1- 4 342 006
- DE-A1- 19 531 413
- DE-A1-102010 005 319

## Beschreibung

Die Erfindung betrifft gemäß dem Patentanspruch 1 ein Hydrauliksystem für eine selbstfahrende landwirtschaftliche Arbeitsmaschine mit einer von einer Brennkraftmaschine angetriebenen, mehrere Hydraulikkreise versorgenden Verstellpumpe, deren Fördervolumen über eine Stelleinrichtung veränderbar ist und die über zumindest eine Druckleitung einen Hydromotor, der einen Kühlerlüfter antreibt, mit Druckmittel versorgt. Weiterhin betrifft die Erfindung gemäß dem Patentanspruch 9 ein Verfahren zum Betrieb eines hydrostatisch angetriebenen Kühlerlüfters einer selbstfahrenden landwirtschaftlichen Erntemaschine, bei dem der Kühlerlüfter von einem innerhalb eines Hydrauliksystems angeordneten Hydromotor angetrieben wird und innerhalb des Hydrauliksystems eine mit einer Druckleitung verbundene Verstellpumpe vorgesehen ist.

Selbstfahrende landwirtschaftliche Arbeitsmaschinen der vorgenannten Gattung können beispielsweise als Ackerschlepper oder selbstfahrende Erntemaschinen, ausgebildet sein. Ackerschlepper weisen in der Regel neben einer Arbeitshydraulik, die zur Verstellung eines Heck- sowie eines Frontkrafthebers dient, eine hydraulische Lenkung auf. Mittels der vorgenannten Kraftheber werden die an den Ackerschlepper gekuppelten Anbaugeräte während einzelner Arbeitsvorgänge in bestimmte Positionen angehoben beziehungsweise abgesenkt. Ein Beispiel für das Arbeiten des Ackerschleppers mit einem Anbaugerät ist das Pflügen, bei dem der Pflug am Vorgewende des Ackers mittels des der Arbeitshydraulik zugeordneten Heckkrafthebers angehoben wird. Gleichzeitig mit diesem Hubvorgang erfolgen zum Wenden des Ackerschleppers mehrere Lenkbewegungen mittels der Lenkhydraulik.

Ähnliche Verhältnisse bestehen bei selbstfahrenden landwirtschaftlichen Erntemaschinen, die frontseitig über einen durch eine Hebevorrichtung heb- und senkbaren Erntevorsatz und eine zumeist auf die Räder der Hinterachse wirkende Lenkhydraulik verfügen. Bestandteil der für das Heben und Senken des Erntevorsatzes vorhandenen Arbeitshydraulik kann außerdem, sofern es sich bei der Erntemaschine um einen Mähdrescher und beim Erntevorsatz um ein Schneidwerk handelt, eine hydraulische Verstellung der Haspel sein. Bei einem entsprechenden selbstfahrenden Mähdrescher wird am Ende des Getreidebestandes, also am Vorgewende zunächst der Erntevorsatz angehoben, und dann wird der Mähdrescher mit angehobenem Erntevorsatz durch mehrere Lenkbewegungen für ein Mähen entlang der gleichen Bestandskante gewendet oder aber gewendet und an eine andere Bestandskante gefahren.

Ein Hydrauliksystem ist aus der DE 43 36 892 A1 bekannt. Dabei ist die Verstellpumpe als Flügelzellenpumpe mit verstellbarem Verdrängungsvolumen ausgebildet. Die Veränderung des Verdrängungsvolumens der Verstellpumpe erfolgt in diesem Fall mittels eines einen Rotor der Flügelzellenpumpe umgebenden exzentrisch verstellbaren Nockenringes, an dem eine hydraulisch betätigbare Stelleinrichtung angreift. Das Druckmittel der Verstellpumpe wird dabei über eine Druckleitung einem Hydromotor zugeführt, der einen Kühlerlüfter antreibt. Weiterhin gelangt ein Teil des Druckmittels über einen Mengenteiler in eine hydraulische Servolenkeinrichtung.

Weiterhin ist aus der DE 10 2009 052 258 A1 ebenfalls ein Hydrauliksystem mit einem einen Kühlerlüfter antreibenden Hydromotor bekannt. Dem Hydromotor wird Druckmittel über eine Verstellpumpe zugeführt. Dabei ist aber im Gegensatz zu der gattungsbildenden Druckschrift eine hydraulische Lenkeinrichtung in einem separaten Hydraulikkreis angeordnet, in welchem sie über eine Konstantpumpe mit Druckmittel versorgt wird. Innerhalb dieses der Lenkeinrichtung zugeordneten separaten Hydraulikkreises ist ein Ölkühler angeordnet. Die Verstellpumpe steht saugseitig mit einer Druckmittelauslassleitung der hydraulischen Lenkung in Verbindung, so dass beide Hydraulikkreise über gemeinsame Leitungsabschnitte verfügen. Der von dem Hydromotor angetriebene Kühlerlüfter soll dabei phasenweise mit entgegengesetzter Drehrichtung angetrieben werden, um im Kühlerblock abgelagerte Partikel zu entfernen. Zu diesem Zweck ist ein 4/2-Wegeventil vorgesehen, mit dem die Drehrichtung des Hydromotors umsteuerbar ist.

Weitere Hydrauliksysteme mit einem einen Kühlerlüfter antreibenden Hydromotor sind bekannt aus der DE 195 31 413 A1 und DE 10 2010 005 319 A1.

Es ist Aufgabe der vorliegenden Erfindung, ein Hydrauliksystem für eine landwirtschaftliche Arbeitsmaschine zu schaffen, in welchem mittels der Verstellpumpe eine für alle Betriebszustände der Arbeitsmaschine ausreichende Druckmittelversorgung gewährleistet ist, wobei die Verstellpumpe insgesamt mit geringer Verlustleistung betrieben werden soll.

Diese Aufgabe wird, ausgehend vom Oberbegriff des Patentanspruchs 1 in Verbindung mit dessen kennzeichnenden Merkmalen gelöst. Gemäß dem kennzeichnenden Teil des Patentanspruchs 1 ist vorgesehen, dass bei einem durch die Verstellpumpe nicht ausgleichbaren Druckabfall im Hydrauliksystem die Leistung des Kühlerlüfters temporär zumindest reduzierbar ist. Hierdurch lassen sich phasenweise auftretende Leistungsspitzen ausgleichen, die von der Eckleistung der Verstellpumpe nicht abdeckbar sind. Hierzu ist eine temporäre Senkung der Leistungsaufnahme des Kühllüfters durch eine Drehzahlreduzierung bis hin zum Stillstand des Kühlerlüfters vorgesehen. Die Drehzahl des Kühlerlüfters kann auch prophylaktisch reduziert werden, bevor die Eckleistung der Verstellpumpe überschritten wird.

Erfindungsgemäß werden der Hydromotor und eine Arbeitshydraulik gemeinsam von der Verstellpumpe mit Druckmittel versorgt, wobei das Schluckvolumen des Hydromotors über eine Stelleinrichtung veränderbar ist und das Hydrauliksystem als Konstantdrucksystem ausgebildet ist, wobei ein in der Druckleitung angeordneter Drucksensor mit der Stelleinrichtung verbunden ist. Der Antrieb des Kühlerlüfters ist folglich als hydrostatisches Getriebe ausgebildet, wobei eine Verstellung des Hydromotors vorgesehen ist. Die Verstellpumpe ist dabei gleichzeitig für die Druckmittelversorgung des Kühlerlüfterantriebes, der Arbeitshydraulik und weiterer hydraulischer Verbraucher vorgesehen.

Unabhängig von der Drehzahl der die Verstellpumpe antreibenden Brennkraftmaschine und dem von der Arbeitshydraulik und den sonstigen Verbrauchern angeforderten Druckmittel wird der Druck im Hydrauliksystem durch entsprechende Verstellvorgänge an der Verstellpumpe und am verstellbaren Hydromotor des Lüfterantriebs konstant gehalten. Dabei ist der Drucksensor mittelbar mit den Stelleinrichtungen verbunden. und wirkt auf eine oder mehrere Regeleinrichtungen, die mit der Stelleinrichtung verbunden ist. Tritt nun ein kurzzeitiger erhöhter Verbrauch seitens der Arbeitshydraulik auf, so soll der Hydromotor für diesen kurzen Zeitraum auf ein geringeres Schluckvolumen gesteuert werden, um den Druck im Hydrauliksystem konstant zu halten.

Herkömmliche Hydrauliksysteme für Arbeitsmaschinen, wie sie aus der DE 43 36 892 A1 oder aus der DE 10 2009 052 258 A1 hervorgehen, sind demgegenüber nicht als Konstantdrucksystem ausgebildet, denn nur die Verstellpumpe sorgt in diesen Systemen aufgrund ihres veränderlichen Verdrängungsvolumens für eine entsprechende Drehzahl des Kühlerlüfters, der demzufolge eine veränderliche Luftmenge durch den entsprechenden Kühler fördern kann. Außerdem ist innerhalb des aus diesen beiden Druckschriften vorbekannten Hydrauliksystems keine Arbeitshydraulik als zusätzlicher Verbraucher vorgesehen. Nach dem gattungsbildenden Dokument soll zwar ein Mengenteiler vorgesehen sein, der das von der Verstellpumpe gelieferte Druckmittel auf einen durch den Hydromotor des Kühlerlüfters führenden ersten Zweig und einen zur Lenkhydraulik führenden zweiten Zweig leitet; dabei besteht aber das Risiko, dass die entsprechenden diesem Verbraucher zugeführten Druckmittelmengen nicht an die jeweiligen Erfordernisse angepasst werden können. Nach der DE 10 2009 052 258 A1 wird die Lenkhydraulik über einen separaten Hydraulikkreis von einer Konstantpumpe mit Druckmittel versorgt, wobei dieser Hydraulikkreis aber über gemeinsame Leitungsabschnitte mit einem für den Antrieb des Kühlerlüfters vorgesehenen Hydraulikkreis kommuniziert.

Erfindungsgemäß wird vorgeschlagen, dass die Druckleitung in einen ersten zur Arbeitshydraulik führenden Leitungszweig und einen zweiten zum verstellbaren Hydromotor führenden Leitungszweig verzweigt ist. An den die Arbeitshydraulik versorgenden Leitungszweig kann dabei auch eine Lenkhydraulik angeschlossen sein. Wie bereits dargelegt, wird es sich bei der Arbeitshydraulik um hydraulische Verbraucher handeln, die nur kurzzeitig mit dem Druckmittel aus der Druckleitung versorgt werden. Diese kurzzeitige Versorgung mit Druckmittel findet primär an einfach wirkenden Hydraulikzylindern statt, die zum Heben von Anbaugeräten oder Vorsatzgeräten sowie zum Heben unterschiedlicher Lasten dienen.

Da auch das Schluckvolumen des den Kühlerlüfter antreibenden Hydromotors stufenlos variierbar ist, kann trotz dieser Anforderung von Druckmittel seitens der Arbeitshydraulik der Systemdruck konstant gehalten werden. Hierbei kann allerdings das Schluckvolumen des Hydromotors kurzzeitig unter die von entsprechenden Temperatursensoren des Hauptkühlers, des Ladeluftkühlers und des Hydraulikölkühlers mittels der Regelung vorgegebenen Werte fallen. Da es sich aber wie gesagt um eine kurzzeitige Anforderung von Druckmittel handelt, wird eine entsprechende Verringerung des Schluckvolumens des Hydromotors bewusst in Kauf genommen. Der Vorteil besteht darin, dass gegenüber bekannten Lösungen das Hydrauliksystem aufgrund der vorhandenen Regelungsmöglichkeiten mit einer gegenüber den ansonsten bestehenden Anforderungen kleiner dimensionierten Verstellpumpe auskommt, die eine deutlich geringere Verlustleistung aufweist und somit zu einer Verringerung des Kraftstoffverbrauchs der die Arbeitsmaschine antreibenden Brennkraftmaschine führt. Ein weiterer Vorteil besteht in der erreichbaren Gewichtsreduzierung aufgrund des Einsatzes einer kleiner dimensionierten Verstellpumpe.

Gemäß der Erfindung ist an die Druckleitung zumindest ein Druckspeicher angeschlossen. Damit wird ein hydraulisches Hybridsystem geschaffen, mit welchem hydraulische Leistungsspitzen, die kurzzeitig auftreten, abgedeckt werden können. Einem Druckeinbruch im Hydrauliksystem, der durch eine Zuschaltung der Arbeitshydraulik als zusätzlichen Verbraucher ausgelöst werden kann, wird zunächst durch eine Vergrößerung des von der Verstellpumpe gelieferten Druckmittelvolumens entgegen gewirkt; wenn das nicht ausreicht, kommen die entsprechenden Reserven der Druckspeicher zum Einsatz, die der Druckleitung über ein Sperrventil zugeführt werden; und wenn das ebenfalls nicht ausreichen sollte, erfolgt eine kurzzeitige Reduzierung des Schluckvolumens des für den Antrieb des Kühlerlüfters vorgesehenen Hydromotors. Im Zusammenhang mit diesem Ablauf des für das Hydrauliksystem vorgesehenen Arbeitsverfahrens sei auch auf die Merkmale des unabhängigen Patentanspruchs 10 verwiesen.

Der Hydromotor ist vorzugsweise als Axialkolbeneinheit ausgebildet, bei welcher eine Kolben aufnehmende Zylindertrommel gegenüber einer Steuerscheibe verschwenkbar ist. Eine derartige Hydropumpe arbeitet nach dem Schrägachsenprinzip, wobei über den Betriebsdruck und das Hubvolumen der Kolben eine Umformung in ein mechanisches Drehmoment erfolgt. Es ist weiterhin sinnvoll, auch die Verstellpumpe als gegenüber einer Steuerscheibe verschwenkbare Axialkolbeneinheit auszubilden. Alternativ dazu besteht aber auch die Möglichkeit, sowohl die Verstellpumpe als auch den Hydromotor jeweils als verstellbare Flügelzelleneinheit auszubilden. Der Einsatz anderer Verstellpumpenbauarten ist ebenfalls denkbar.

Erfindungsgemäß soll der Kühlerlüfter Kühlern für das Kühlwasser der Brennkraftmaschine, für deren Ladeluft sowie für das Druckmittel des Hydrauliksystems zugeordnet sein. Dabei kann der Kühlerlüfter die Außenluft durch die entsprechende Kühlerbaugruppe saugen, so dass der gewünschte Kühleffekt erzielt wird. Durch das Hydrauliksystem mit verstellbarer Pumpe und verstellbarem Hydromotor kann die Lüfterdrehzahl weitgehend unabhängig von der Antriebsdrehzahl der Brennkraftmaschine geregelt werden.

Weiterhin sollen die Stelleinrichtungen der Verstellpumpe und des Hydromotors mit einer Regeleinrichtung zusammenwirken, wobei dieser Regeleinrichtung Sensoren zugeordnet sind, mittels welcher eine Kühlwassertemperatur, eine Ladelufttemperatur, eine Temperatur des Druckmittels des Hydrauliksystems, eine Temperatur der Umgebungsluft sowie eine Drehzahl der Brennkraftmaschine wie auch des Kühlerlüfters ermittelt werden können. Natürlich können einzelne dieser Parameter oder auch sämtliche Parameter ermittelt und zur Betätigung der entsprechenden Stelleinrichtung des verstellbaren Hydromotors herangezogen werden.

Außerdem können die Stelleinrichtungen eine Regeleinrichtung aufweisen, die mit einem Sensor zur Erfassung eines Betriebszustandes der Arbeitshydraulik verbunden ist. Es kann sich um einen Sensor handeln, der die Stellung eines zur Betätigung der Arbeitshydraulik dienenden Wegeventils ermittelt, wobei bereits zu Beginn eines Verstellvorganges der Arbeitshydraulik dafür gesorgt wird, dass mittels eines entsprechenden Ventils das in den Druckspeichern vorhandene Druckmittel in die Druckmittelleitung abgegeben wird und dass anschließend ein Aktivierungssignal an die Regelung des verstellbaren Hydromotors gesendet wird. Dabei können die Stelleinrichtungen der Verstellpumpe und des Hydromotors mittels eines elektrisch betätigten Proportionalventils betätigbar sein. Ein derartiges Proportionalventil besteht aus einem Vorsteuerventil mit einem Proportionalmagneten, dem in der Regel ein Wegeventil zugeordnet ist.

Von besonderem Vorteil ist eine Verwendung des erfindungsgemäßen Hydrauliksystems in einer Arbeitsmaschine, die als selbstfahrender Mähdrescher oder Feldhäcksler ausgebildet ist, wobei die entsprechende Arbeitshydraulik als Hubwerk eines Erntevorsatzes dient. Ein entsprechender Mähdrescher weist einen Erntevorsatz auf, der als Schneidwerk oder Maispflücker ausgebildet sein kann. Wenn beispielsweise Getreide an einer Bestandskante geerntet wird, muss der Mähdrescher jeweils an dem am Bestandsende liegenden Vorgewende derart manövriert werden, dass anschließend wieder an der gleichen Bestandskante in entgegengesetzter Richtung geerntet wird. Auch beim Ernten an mehreren Bestandskanten sind ein entsprechender Hubvorgang und Lenkvorgänge erforderlich. Vor dem Wenden des Mähdreschers wird kurzzeitig das Hubwerk des Erntevorsatzes betätigt, ansonsten kann es während des Erntevorganges noch geringfügige Korrekturen der Höheneinstellung des Mähwerks geben, die ebenfalls mittels des Hubwerks vorgenommen werden. Während dieser kurzzeitigen Verstellungen fordert die Arbeitshydraulik Druckmittel von der Verstellpumpe an. Wie bereits dargelegt, soll ein Druckeinbruch im Hydrauliksystem dadurch verhindert werden, dass entsprechende Druckspeicher Druckmittel zur Verfügung stellen und, falls das nicht ausreicht, die Stelleinrichtung die Druckmittelaufnahme durch den verstellbaren Hydromotor reduziert.

Schließlich soll bei einem Verfahren zum Betrieb eines hydrostatisch angetriebenen Kühlerlüfters einer selbstfahrenden landwirtschaftlichen Erntemaschine, bei dem der Kühlerlüfter von einem innerhalb eines Hydrauliksystems angeordneten Hydromotor angetrieben wird und innerhalb des Hydrauliksystems eine mit einer Druckleitung verbundene Verstellpumpe vorgesehen ist, innerhalb des Hydrauliksystems eine phasenweise betätigbare Hubeinrichtung eines Erntevorsatzes angeordnet sein, wobei mittels einer Verstellung des Fördervolumens der Verstellpumpe und/oder eines Schluckvolumens des über eine Stelleinrichtung verstellbar ausgebildeten Hydromotors der Druck in der Druckleitung konstant gehalten wird und wobei während einer Betätigung der Hubeinrichtung und einem damit verbundenen Druckabfall in der Druckleitung das Schluckvolumen des Hydromotors auf einen minimalen Wert reduziert wird.

Mit diesem Verfahren wird also eine Drehzahlregelung des Kühlerlüfters innerhalb des Konstantdrucksystems durch die Verstellung des Schluckvolumens des den Kühlerlüfter antreibenden Hydromotors erreicht. Bei einer auftretenden Unterversorgung des Konstantdrucksystems wird diese durch eine gezielte temporäre Drehzahlabsenkung des Kühlerlüfters kompensiert. Diese Unterversorgung tritt, wie bereits dargelegt, primär am Ende eines Mäh- und Dreschvorgangs an dem am Ende des zu erntenden Bestands liegenden Vorgewendes auf. Beim Wenden des Mähdreschers werden kurzzeitig von der Hubeinrichtung des Erntevorsatzes und der Lenkhydraulik zusätzliche Druckmittelmengen verbraucht. Wenn sich dabei ein Druckabfall im Konstantdrucksystem abzeichnet bzw. auftritt, so wird dieser zunächst durch separate Druckspeicher kompensiert, und, sofern das zur Kompensation nicht ausreicht, das Schluckvolumen des stufenlos verstellbaren Hydromotors kurzzeitig reduziert. Das Verfahren ermöglicht es im Sinne einer vorausschauenden Steuerung zudem bei hohen Leistungsanforderungen wie dem Anheben des Vorsatzgerätes die Drehzahl des Kühlerlüfters zu einem Zeitpunkt abzusenken, bevor die zur Verfügung stehende Eckleistung der Verstellpumpe überschritten wird, das heißt bevor es zu einem Druckabfall im Konstantdrucksystem kommt.

Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der ein Ausführungsbeispiel der Erfindung vereinfacht dargestellt ist.

Es zeigt:

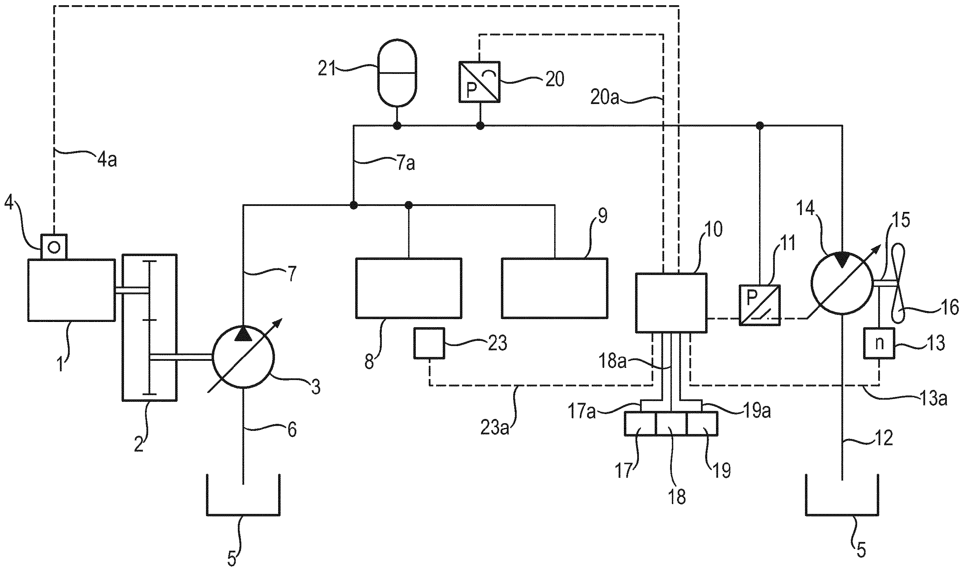

- Figur 1: ein Schema eines erfindungsgemäßen Hydrauliksystems mit einer Verstellpumpe und einem ebenfalls verstellbaren Hydromotor.

Die einzige Figur 1 zeigt ein erfindungsgemäßes Hydrauliksystem, in welchem mit 1 eine Brennkraftmaschine bezeichnet ist, die eine Verstellpumpe 3 antreibt. Hierzu kann, wie in der Figur dargestellt, zwischen der Brennkraftmaschine 1 und der Verstellpumpe 3 ein Getriebe 2 angeordnet sein. Alternativ dazu kann die Verstellpumpe 3 aber auch direkt von der Brennkraftmaschine 1 angetrieben werden.

Die Verstellpumpe 3, ist vorzugsweise als Axialkolbenpumpe ausgebildet, die nach dem Schrägscheibenprinzip mit veränderlichem Verdrängungsvolumen arbeitet. Der Brennkraftmaschine 1 ist ein Sensor 4 für die Drehzahlerfassung zugeordnet, der über eine Signalleitung 4a mit einer Regeleinrichtung 10 verbunden ist.

Die Verstellpumpe 3 steht über eine Saugleitung 6 mit einem Oltank 5 in Verbindung und fördert Druckmittel über eine Druckleitung 7 in eine Arbeitshydraulik 8, die wie bereits dargelegt, als Hubeinrichtung für einen Vorsatzgerät einer Erntemaschine ausgebildet sein kann. In der schematischen Darstellung wird diese Arbeitshydraulik 8 gemeinsam mit einer Lenkhydraulik 9 über die Druckleitung 7 versorgt. Von der Druckleitung 7 zweigt ein mit 7a bezeichneter Zweig der Druckleitung 7 ab, der zu einem hinsichtlich seines Schluckvolumens verstellbaren Hydromotor 14 führt. Dieser Hydromotor 14 kann ebenfalls als Axialkolbeneinheit nach dem Schrägachsenprinzip ausgebildet sein, wobei sich zur Veränderung des Schluckvolumens eine in dem Hydromotor 14 vorgesehene Schrägscheibe verschwenken lässt.

Alternativ dazu kann auch eine die Kolben dieses nach dem Axialkolbenprinzip arbeitenden Hydromotors aufnehmende Zylindertrommel gegenüber einer festen Steuerscheibe verschwenkt werden.

Der Hydromotor 14 ist über eine an dessen Steuerscheibe angreifende Stelleinrichtung 11 in seinem Schluckvolumen veränderbar. Mit der Vergrößerung des Schluckvolumens des Hydromotors 14, das aus einem vergrößerten Schwenkwinkel resultiert, erhöht sich die Abtriebsdrehzahl an einer Abtriebswelle 15, die mit einem Kühlerlüfter 16 verbunden ist. Die Abtriebsdrehzahl des Kühlerlüfters 16 wird durch einen Drehzahlsensor 13 überwacht, der über eine Signalleitung 13a mit der Regeleinrichtung 10 verbunden ist. Der Kühlerlüfter 16 fördert einen Kühlluftstrom durch nicht näher bezeichnete Wärmetauscher für das Kühlwasser der Brennkraftmaschine 1 sowie für einen Ladeluftkühler. Das aus dem Hydromotor 14 austretende Druckmittel gelangt in eine Rücklaufleitung 12, die in den gemeinsamen Öltank 5 geführt wird.

Wie weiterhin aus der einzigen Figur 1 hervorgeht, soll die Stelleinrichtung 11 von der Regeleinrichtung 10 beherrscht sein, wobei dieser Regeleinrichtung 10 zum einen ein in der Druckleitung 7 über einen Drucksensor 20 ermittelten Druck über eine Signalleitung 20a sowie weitere Werte aus einem Temperatursensor 17 für eine Temperatur eines Wasserkühlers der Brennkraftmaschine 1 über eine Signalleitung 17a, aus einem Temperatursensor 18 für eine Temperatur der Ladeluft über eine Signalleitung 18a und aus einem Temperatursensor 19 für eine Temperatur des Hydraulikmediums über eine Signalleitung 19a zugeführt werden. Die Regeleinrichtung 10 steuert in Abhängigkeit von diesen Parametern die Stelleinrichtung 11 und somit das Schluckvolumen des Hydromotors 14.

An die Druckleitung 7 ist weiterhin ein Druckspeicher 21 angeschlossen, der, wie der Zeichnung zu entnehmen ist, als Speicher mit einer Gasspannvorrichtung ausgebildet sein soll. Anstelle dieses einzelnen Druckspeichers 21 können auch mehrere Druckspeicher an die Druckleitung 7 angeschlossen sein.

Im normalen Erntebetrieb, d. h. ohne eine Betätigung der Arbeitshydraulik 8 wird das Hydrauliksystem derart gesteuert, dass in der Druckleitung 7 ein konstanter Druck herrscht. Wird allerdings beim Erreichen eines Vorgewendes die Arbeitshydraulik 8 betätigt, so kann dies zu einem Druckabfall in der Druckleitung 7 führen. Das schnelle Heben der Arbeitshydraulik 8 kann durch eine geeignete Sensorik 23 überwacht werden, die über eine Signalleitung 23 a mit der Regeleinrichtung 10 in Kommunikation steht. Der Druckabfall wird zunächst durch den Druckspeicher 21 kompensiert und, wenn dies nicht ausreichend ist, durch eine zusätzliche Verstellung des Hydromotors 14 in Richtung eines verringerten Schluckvolumens reduziert. Die Sensierung eines schnellen Hebens der Arbeitshydraulik 8 durch den Sensor 23 kann auch herangezogen werden, um prophylaktisch die Drehzahl des Kühlerlüfters 16 über die Regeleinrichtung 10 zu reduzieren, bevor die Eckleistung der Verstellpumpe 3 überschritten wird.

Diese Einspeisung zusätzlichen Druckmittels aus dem Druckspeicher 21 in die Druckleitung 7 erfolgt auch im Hinblick auf einen zusätzlichen Verbrauch durch die Lenkhydraulik 9. Somit kann das Hydrauliksystem hinsichtlich der Größe der Verstellpumpe auf die normalen Anforderungen ausgelegt sein, wobei entsprechende Verbrauchsspitzen, die kurzzeitig durch einen oder beide Verbraucher Arbeitshydraulik 8 und Lenkhydraulik 9 auftreten können, durch eine entsprechende Einspeisung aus dem Druckspeicher 21 und eine Reduzierung der Schluckmenge des Hydromotors 14 kompensiert werden. Eine dadurch erreichbare verringerte Eckleistung der zum Einsatz kommenden Verstellpumpe 3 sorgt nicht nur für eine Kostenreduktion für das Hydrauliksystem sondern auch für eine deutlich verringerte Leistungsaufnahme seitens der Brennkraftmaschine 1 und damit zu einer deutlichen Minimierung des Kraftstoffverbrauchs, so dass die Arbeitsmaschine wirtschaftlicher betrieben werden kann.

### Bezugszeichenliste

- 1: Brennkraftmaschine
- 2: Getriebe
- 3: Verstellpumpe
- 4: Sensor Motordrehzahl
- 4a: Signalleitung
- 5: Öltank
- 6: Saugleitung
- 7: Druckleitung
- 7a: Zweig von Druckleitung 7
- 8: Arbeitshydraulik
- 9: Lenkhydraulik
- 10: Regeleinrichtung
- 11: Stelleinrichtung
- 12: Rücklaufleitung
- 13: Drehzahlsensor
- 13a: Signalleitung
- 14: Hydromotor
- 15: Abtriebswelle
- 16: Kühlerlüfter
- 17: Temperatursensor
- 17a: Signalleitung
- 18: Temperatursensor
- 18a: Signalleitung
- 19: Temperatursensor
- 19a: Signalleitung
- 20: Druckmessglied
- 21: Druckspeicher
- 22:
- 23: Sensorik
- 23a: Signalleitung

## Patentansprüche

1. Hydrauliksystem für eine selbstfahrende landwirtschaftliche Arbeitsmaschine, mit einer von einer Brennkraftmaschine (1) angetriebenen, mehrere Hydraulikkreise versorgenden Verstellpumpe (3), deren Fördervolumen über eine der Verstellpumpe (3) zugeordnete Stelleinrichtung veränderbar ist und die über zumindest eine Druckleitung (7, 7a) einen Hydromotor (14), der einen Kühlerlüfter (16) antreibt, mit Druckmittel versorgt, wobei bei einem durch die Verstellpumpe (3) nicht ausgleichbaren Druckabfall im Hydrauliksystem die Leistung des Kühlerlüfters (16) temporär zumindest reduzierbar ist, wobei der Hydromotor (14) und eine als Hubeinrichtung ausgebildete Arbeitshydraulik (8) gemeinsam von der Verstellpumpe (3) mit Druckmittel versorgt werden, wobei das Schluckvolumen des Hydromotors (14) über eine dem Hydromotor (14) zugeordnete Stelleinrichtung (11) veränderbar ist und wobei das Hydrauliksystem als Konstantdrucksystem ausgebildet ist, wobei an die Druckleitung (7, 7a) zumindest ein Druckspeicher (21) und ein Drucksensor (20) angeschlossen sind und der Drucksensor (20) mit einer Regeleinrichtung (10) verbunden ist und die Regeleinrichtung (10) die dem Hydromotor (14) zugeordnete Stelleinrichtung (11) steuert.

2. Hydrauliksystem nach Patentanspruch 1 , **dadurch gekennzeichnet, dass** die Druckleitung (7) in einen ersten, zur Arbeitshydraulik (8) führenden Leitungszweig (7) und einen zweiten, zum verstellbaren Hydromotor (14) führenden Leitungszweig (7a) verzweigt ist.

3. Hydrauliksystem nach Patentanspruch 1, **dadurch gekennzeichnet, dass** der Hydromotor (14) als Axialkolbeneinheit ausgebildet ist, bei welcher eine Kolben aufnehmende Zylindertrommel gegenüber einer Steuerscheibe verschwenkbar ist.

4. Hydrauliksystem nach Patentanspruch 1, **dadurch gekennzeichnet, dass** der Kühlerlüfter (16) Kühlern für das Kühlwasser der Brennkraftmaschine (1), für deren Ladeluft und für das Druckmittel des Hydrauliksystems zugeordnet ist.

5. Hydrauliksystem nach Patentanspruch 1, **dadurch gekennzeichnet, dass** die Regeleinrichtung (10) mit Sensoren (17, 18, 19, 20) zur Erfassung einer Kühlwassertemperatur und/oder einer Ladelufttemperatur und/oder einer Temperatur des Druckmittels des Hydrauliksystems und/oder einer Temperatur der Umgebungsluft und/oder einer Drehzahl der Brennkraftmaschine (1) verbunden ist.

6. Hydrauliksystem nach Patentanspruch 1, **dadurch gekennzeichnet, dass** die Regeleinrichtung (10) mit einem Sensor (23) zur Erfassung eines Betriebszustandes der Arbeitshydraulik (8) verbunden ist.

7. Hydrauliksystem nach den Patentansprüchen 4 und 5, **dadurch gekennzeichnet, dass** zumindest die Stelleinrichtung (11) mittels eines elektrisch betätigten Proportionalventils betätigbar ist.

8. Hydrauliksystem nach Patentanspruch 1, **dadurch gekennzeichnet, dass** die landwirtschaftliche Arbeitsmaschine als selbstfahrender Mähdrescher oder Feldhäcksler und die Arbeitshydraulik (8) als Hubvorrichtung eines Erntevorsatzes ausgebildet sind.

9. Verfahren zum Betreiben eines hydrostatisch angetriebenen Kühlerlüfters (16) einer selbstfahrenden landwirtschaftlichen Erntemaschine, bei dem der Kühlerlüfter (16) von einem innerhalb eines Hydrauliksystems angeordneten Hydromotor (14) angetrieben wird und innerhalb des Hydrauliksystems eine mit einer Druckleitung (7, 7a) verbundene Verstellpumpe (3) vorgesehen ist, wobei innerhalb des Hydrauliksystems als Arbeitshydraulik (8) eine phasenweise betätigte Hubeinrichtung eines Erntevorsatzes angeordnet ist, wobei mittels einer Verstellung des Fördervolumens der Verstellpumpe (3) und/oder eines Schluckvolumens des über eine Stelleinrichtung (11) verstellbar ausgebildeten Hydromotors (14) der Druck in der Druckleitung (7, 7a) konstant gehalten wird und wobei während einer Betätigung der als Hubeinrichtung ausgebildeten Arbeitshydraulik (8) und einem damit verbundenen Druckabfall in der Druckleitung (7, 7a) das Schluckvolumen des Hydromotors (14) auf einen minimalen Wert reduziert wird, wobei der Hydromotor (14) und die Arbeitshydraulik (8) gemeinsam von der Verstellpumpe (3) mit Druckmittel versorgt werden, wobei das Schluckvolumen des Hydromotors (14) über die Stelleinrichtung (11) veränderbar ist und wobei das Hydrauliksystem als Konstantdrucksystem ausgebildet ist, wobei an die Druckleitung (7, 7a) zumindest ein Druckspeicher (21) und ein Drucksensor (20) angeschlossen sind und der Drucksensor (20) mit einer Regeleinrichtung (10) verbunden ist und die Regeleinrichtung (10) (1) die Stelleinrichtung (11) steuert.

## Claims

1. A hydraulic system for a self-propelled agricultural working machine comprising a variable displacement pump (3) which is driven by an internal combustion engine (1) and which supplies a plurality of hydraulic circuits and whose delivery volume is variable by way of an adjusting device associated with the variable displacement pump (3) and which by way of at least one pressure line (7, 7a) supplies pressure medium to a hydraulic motor (14) which drives a radiator fan (16), wherein upon a pressure drop in the hydraulic system, that cannot be compensated by the variable displacement pump (3), the output of the radiator fan (16) can be at least reduced temporarily, wherein the hydraulic motor (14) and an operating hydraulic arrangement (8) which is in the form of a lifting device are supplied with pressure medium jointly by the variable displacement pump (3), wherein the displacement volume of the hydraulic motor (14) is variable by way of an adjusting device (11) associated with the hydraulic motor (14) and wherein the hydraulic system is in the form of a constant pressure system, wherein at least one pressure storage means (21) and a pressure sensor (20) are connected to the pressure line (7, 7a) and the pressure sensor (20) is connected to a control device (10) and the control device (10) controls the adjusting device (11) associated with the hydraulic motor (14).

2. A hydraulic system according to claim 1 **characterised in that** the pressure line (7) is branched into a first line branch (7) leading to the operating hydraulic arrangement (8) and a second line branch (7a) leading to the adjustable hydraulic motor (14).

3. A hydraulic system according to claim 1 **characterised in that** the hydraulic motor (14) is in the form of an axial piston unit in which a cylinder drum accommodating pistons is pivotable with respect to a control disc.

4. A hydraulic system according to claim 1 **characterised in that** the radiator fan (16) is associated with radiators for the cooling water of the internal combustion engine (1), for the charge air thereof and for the pressure medium of the hydraulic system.

5. A hydraulic system according to claim 1 **characterised in that** the control device (10) is connected to sensors (17, 18, 19, 20) for detecting a cooling water temperature and/or a charge air temperature and/or a temperature of the pressure medium of the hydraulic system and/or a temperature of the ambient air and/or a rotary speed of the internal combustion engine (1).

6. A hydraulic system according to claim 1 **characterised in that** the control device (10) is connected to a sensor (23) for detecting an operating state of the operating hydraulic arrangement (8).

7. A hydraulic system according to claims 4 and 5 **characterised in that** at least the adjusting device (11) is actuable by means of an electrically actuated proportional valve.

8. A hydraulic system according to claim 1 **characterised in that** the agricultural working machine is in the form of a self-propelled combine harvester or forage harvester and the operating hydraulic arrangement (8) is in the form of a lifting device of a front harvesting attachment.

9. A method of operating a hydrostatically driven radiator fan (16) Of a self-propelled agricultural harvester in which the radiator fan (16) is driven by a hydraulic motor (14) arranged within a hydraulic system and provide within the hydraulic system is a variable displacement pump (3) connected to a pressure line (7, 7a), wherein arranged within the hydraulic system as an operating hydraulic arrangement (8) is a phase-wise actuated lifting device of a front harvesting attachment, wherein the pressure in the pressure line (7, 7a) is kept constant by means of adjustment of the delivery volume of the variable displacement pump (3) and/or a displacement volume of the hydraulic motor (14) adapted to be adjustable by way of an adjusting device (11) and wherein during actuation of the operating hydraulic arrangement (8) which is in the form of the lifting device a pressure drop linked thereto in the pressure line (7, 7a) the displacement volume of the hydraulic motor (14) is reduced to a minimum value, wherein the hydraulic motor (14) and the operating hydraulic arrangement (8) are supplied with pressure medium jointly by the variable displacement pump (3), wherein the displacement volume of the hydraulic motor (14) is variable by way of the adjusting device (11) and wherein the hydraulic system is in the form of a constant pressure system, wherein at least one pressure storage means (21) and a pressure sensor (20) are connected to the pressure line (7, 7a) and the pressure sensor (20) is connected to a control device (10) and the control device (10) controls the adjusting device (11).

## Revendications

1. Système hydraulique pour une machine de travail agricole automotrice, comprenant une pompe de réglage (3) qui est entraînée par un moteur à combustion interne (1), qui alimente plusieurs circuits hydrauliques, dont le volume refoulé est variable par l'intermédiaire d'un équipement de réglage associé à la pompe de réglage (3) et qui, par l'intermédiaire d'au moins une ligne de pression (7, 7a), alimente en agent de pression un moteur hydraulique (14) qui entraîne un ventilateur de refroidissement (16), en cas de baisse de pression dans le système hydraulique non compensable par la pompe de réglage (3), la puissance du ventilateur de refroidissement (16) pouvant être au moins temporairement réduite, le moteur hydraulique (14) et un moyen hydraulique de travail (8) conformé en équipement de levage étant alimentés conjointement en agent de pression par la pompe de réglage (3), le volume d'absorption du moteur hydraulique (14) étant variable par l'intermédiaire d'un équipement de réglage (11) associé au moteur hydraulique (14), le système hydraulique étant conformé en système à pression constante, à la ligne de pression (7, 7a) étant associés au moins un accumulateur de pression (21) et un capteur de pression (20), et le capteur de pression (20) étant relié à un équipement de régulation (10), et l'équipement de régulation (10) commandant l'équipement de réglage (11) associé au moteur hydraulique (14).

2. Système hydraulique selon la revendication 1, **caractérisé en ce que** la ligne de pression (7) est ramifiée en une première branche de ligne (7) menant au moyen hydraulique de travail (8) et en une seconde branche de ligne (7a) menant au moteur hydraulique réglable (14).

3. Système hydraulique selon la revendication 1, **caractérisé en ce que** le moteur hydraulique (14) est conformé en unité à pistons axiaux dans laquelle un tambour cylindrique recevant des pistons est pivotant par rapport à un plateau oscillant.

4. Système hydraulique selon la revendication 1, **caractérisé en ce que** le ventilateur de refroidissement (16) est associé à des refroidisseurs pour l'eau de refroidissement du moteur à combustion interne (1), pour l'air de charge de celui-ci et pour l'agent de pression du système hydraulique.

5. Système hydraulique selon la revendication 1, **caractérisé en ce que** l'équipement de régulation (10) est relié à des capteurs (17, 18, 19, 20) pour détecter une température d'eau de refroidissement et/ou une température d'air de charge et/ou une température de l'agent de pression du système hydraulique et/ou une température de l'air ambiant et/ou une vitesse de rotation du moteur à combustion interne (1).

6. Système hydraulique selon la revendication 1, **caractérisé en ce que** l'équipement de régulation (10) est relié à un capteur (23) pour détecter un état de fonctionnement du moyen hydraulique de travail (8).

7. Système hydraulique selon les revendications 4 et 5, **caractérisé en ce qu'**au moins l'équipement de réglage (11) est actionnable au moyen d'une valve proportionnelle actionnée électriquement.

8. Système hydraulique selon la revendication 1, **caractérisé en ce que** la machine de travail agricole est conformée en moissonneuse-batteuse ou ensileuse automotrice, et le moyen hydraulique de travail (8) en dispositif de levage d'un outil frontal.

9. Procédé d'exploitation d'un ventilateur de refroidissement entraîné hydrostatiquement (16) d'une machine agricole de récolte automotrice, dans lequel le ventilateur de refroidissement (16) est entraîné par un moteur hydraulique (14) disposé à l'intérieur d'un système hydraulique, et une pompe de réglage (3) reliée à une ligne de pression (7, 7a) est prévue à l'intérieur du système hydraulique, à l'intérieur du système hydraulique étant disposé à titre de moyen hydraulique de travail (8) un équipement de levage, actionné par phases, de l'outil frontal, la pression dans la ligne de pression (7, 7a) étant maintenue constante au moyen d'un réglage du volume refoulé de la pompe de réglage (3) et/ou d'un volume d'absorption du moteur hydraulique (14) conçu de manière réglable par l'intermédiaire d'un équipement de réglage (11), pendant un actionnement du moyen hydraulique de travail (8) conformé en équipement de levage et une baisse de pression résultante dans la ligne de pression (7, 7a), le volume d'absorption du moteur hydraulique (14) étant ramené à une valeur minimale, le moteur hydraulique (14) et le moyen hydraulique de travail (8) étant alimentés conjointement en agent de pression par la pompe de réglage (3), le volume d'absorption du moteur hydraulique (14) étant variable par l'intermédiaire de l'équipement de réglage (11), et le système hydraulique étant conformé en système à pression constante, à la ligne de pression (7, 7a) étant reliés au moins un accumulateur de pression (21) et un capteur de pression (20), et le capteur de pression (20) étant relié à un équipement de régulation (10), et l'équipement de régulation (10) commandant l'équipement de réglage (11).
